# EUROPEAN PATENT APPLICATION

(11) **EP 0 834 246 A1**
(43) Date of publication of application: **08.04.1998**
(21) Application number: 97203043.1
(22) Date of filing: 02.10.1997
(51) Int. Cl.: A01C 7/10, A01C 7/08

(54) **A seed drill**

(30) Priority: 03.10.1996 NL 1004181
(71) Applicant: MAASLAND N.V., 3155 PD Maasland (NL)
(72) Inventor: Bom, Cornelis Johannes Gerardus, 3181 VC Rozenburg (NL)
(74) Representative: Mulder, Herman

(57) **Abstract**

The invention relates to a seed drill (3) provided with sowing elements (11) for depositing seed in or on the ground, and with an electronic control and monitoring unit (31) for controlling and/or monitoring functions of the seed drill, which unit (31) cooperates with indication means (33 - 35) for informing and/or alarming a user of the seed drill, the sowing elements (11) being pivotably mounted in the machine (3) so as to be limited in at least one downward direction, whereas detection means (28) are included in the seed drill (3) in such a manner that the fact of being in an operative or inoperative position of at least one sowing element (11) can be detected, and which indication means are automatically put out of operation when the control and monitoring unit (31) receives, via the detection means (28), a signal from which it can be deduced that at least the relevant sowing element (11) is in an inoperative position.

## Description

The present invention relates to a seed drill as described in the preamble of claim 1.

Such a seed drill is known from European patent application 0 476 266. Such machines have many drawbacks. For example, when turning on a headland, the indication elements activated by the control and monitoring unit and designed as optical and/or acoustical ones, are automatically put out of operation. This construction has also the drawback that a check of the seed drill is time-consuming. For carrying out tests, the step wheel has to be brought into rotation, e.g. with the aid of a second person who keeps the wheel in movement. According to a further solution, the putting out of operation depends on the two marker members for marking a next working pass, each arranged at a side of the machine, being in an inoperative position. This has the disadvantage that for testing the control and monitoring unit a marker member has to be lowered. For the purpose of testing, the machine has to be placed in a free sizable space and has to be connected to the hydraulic circuit of a tractor. During operation, another solution has the drawback that, usually, during the last working pass of the machine, it is not possible to check the seed drill functions, because, due to the presence of e.g. a row of trees, the marker member has to be then in its inoperative position.

The present invention has for its object to obtain solutions which are favourable from a technical point of view, and in which the said drawbacks are not present. In accordance with the invention, this is achieved in that the sowing elements are pivotably mounted in the machine so as to be limited in at least one downward direction, whereas detection means are included in the seed drill in such a manner that the fact of being in an operative or inoperative position of at least one sowing element can be detected, and which indication means are automatically put out of operation when the control and monitoring unit receives, via the detection means, a signal from which it can be deduced that at least the relevant sowing element is in an inoperative position.

In a favourable embodiment of the invented construction, in which the detection means are included between a stop limiting the downward movement of a sowing element and the relative sowing element, the seed drill does not have to be coupled with an external hydraulic system, because the sowing elements can be adjusted manually into an inoperative position. If desired, the latter position can simply be maintained by means of an accessory. In an embodiment which is less vulnerable to earth and dust, and in which nevertheless the said advantages are maintained for the greater part, the seed drill is provided with a carrier which is movable relative to the frame of the seed drill for adjusting the sowing elements together into and out of the operative position, and the detection means are arranged between the frame and the carrier or a portion movable therewith.

In an embodiment in which the seed drill, in particular the function of the control and monitoring unit thereof, is further improved, according to the invention, the control and monitoring unit may be provided with control means for realizing a condition in which the control and monitoring unit functions independently of the checking functions for establishing an inoperative position of a sowing element. Such a construction can be applied both in combination with the aforementioned solutions according to the present invention and in combination with the known solutions. In a favourable embodiment, the control means are constituted by a combination of two or more control keys which, used individually, have an other and different effect than the said putting out of operation of the checking function. Such an embodiment has the advantage that the control panel of a control and monitoring unit will not be unnecessarily large and that the existing embodiments for realizing the said putting out of operation of the checking function does not have to be modified.

For a better understanding of the invention, reference will now be made to the accompanying drawings, in which:
Figure 1 shows, in side view, the machine according to the invention, in a position in which it is connected with the lifting hitch of a tractor, and
Figure 2 is an enlarged view of a detail of the machine according to the arrow II in Figure 1.

Corresponding parts in the drawings have been indicated by the same reference numerals. Furthermore, the invention is by no means restricted to the embodiments shown and described; they only serve to illustrate the inventive idea.

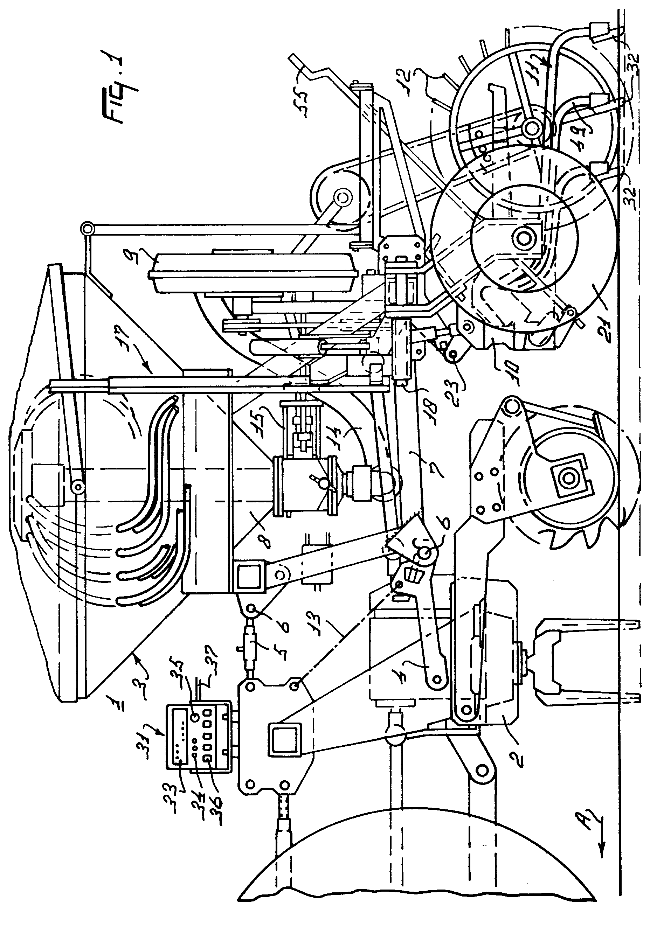

Figure 1 shows an agricultural machine 1, which is a combination of a rotary harrow 2 known per se and a seed drill 3. At the rear side of the trestle the rotary harrow 2 is provided with coupling arms 4, 5 known per se, engaging the coupling points 6, by means of which the present seed drill 3 might also be coupled in a customary manner with the standardized three-point lifting hitch of a tractor. The seed drill 3 comprises a frame 7, to which the coupling points 6 are fixed and to which there are attached a hopper 8, a ventilator device 9 for the purpose of pneumatic transport of seeds, a carrier beam 10 for the sowing elements 11 and a driving wheel 12. Via a tube 14 the ventilator 9 is connected to a metering member 15, which is fastened to the lower side of the hopper 8. In a manner known per se, the metering member 15 is in driven connection with the driving wheel or step wheel 12. The metering member 15 supplies seed from the hopper 8 to a mixing tube having a length of approximately one metre, which is in line with the ventilator tube 14 and extends vertically in the centre of the hopper. At its upper end the mixing tube debouches into a distributing member known per se, in which the seed and air currents are distributed among flexible conveyor tubes connected to the distributing member, which flexible conveyor tubes lead to the sowing elements 11.

The seed drill 3 is further provided with a hydraulic actuator device 16 for the purpose of raising and lowering marker members 17. The latter are connected, pivotably about a horizontal axis 18 orientated transversely to the direction of travel A, with the seed drill 3 and are intended for marking a next working pass. Near its rear side the frame 7 comprises a frame beam 20 extending transversely to the direction of travel A, on which frame beam 20 the ventilator device 9 is mounted near the transverse centre of the machine. To the ends of said frame beam 20 there are attached wheel supports including wheels 21 for the machine.

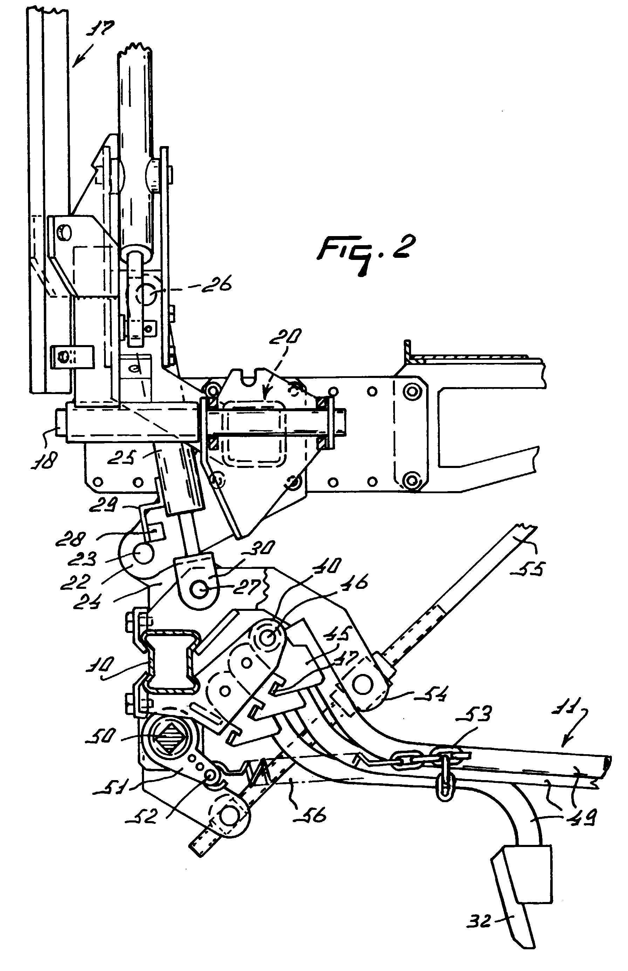

The machine 1 comprises a couple of downwardly extending supports 22, provided against the lower side of the frame beam 20 (Figure 2). Against the lower ends of the latter supports 22, there are provided, pivotably about a pivotal axis 23 orientated horizontally relative to the direction of travel A, the carrier beam 10 for the sowing elements 11, the driving wheel 12 and a non-shown coverer device. In the vicinity of a support 22 for the carrier 10, the machine 1 comprises an adjusting element 25 for putting the sowing elements 11 into and out of operation. For this purpose the adjusting element 25 is arranged with its ends about pivotal axes 26, 27 respectively orientated transversely to the direction of travel A, parallel to the pivotal axis 23. An upper pivotal axis 26 which, seen in side view, is disposed at least partially straight above the pivotal axis 23, is supported by a support extending upwardly and rearwardly from the frame beam. At some distance from the pivotal axis 23, measured in the direction of travel A, a lower pivotal axis 27 is included in a console 24 connected with the carrier beam 10. The console 24, which is arch-shaped and extends from the upper side of the carrier beam 10 at least initially upwards and rearwards. Beyond a part, located at some distance from the carrier beam 10, in which part the pivotal axis 26 is included, the console 24 further extends rearwards. Near its rearmost end the console 24 comprises a support for an adjusting member 55 which, in this case, is produced as a screw spindle. Hence, in the present embodiment, the adjusting element 25 extends substantially vertically between the frame beam 20 and the carrier 10. The rearmost frame beam 20 constitutes part of a cube-shaped frame 7 of the seed drill.

As shown in Figure 2, in the present embodiment the carrier 10 is constituted by a beam. The sowing elements 11 coupled with the carrier 10 comprise a seed tube 49 which, with its foremost end, is connected to a flexible conveyor line which is connected itself with the distributing member. In the present embodiment, against the rear end of the seed tube 49, there is provided a seed coulter or shoe 32, for depositing the seed supplied in the ground. The seed tubes 49 are pivotably connected with the carrier 10 via a holder 40, which, seen in plan view, is U-shaped. By means of a single bolt/nut-connection 46, via arms 45, a seed tube 49 is pivotably connected, in two points located at some distance, with the holder 40. Part of an arm 45 extends laterally to such an extent that, in the downward direction of movement of a sowing element 11, it forms a stop relative to the carrier 10 and the holder 40 in that its abutment face 47 abuts to the relevant holder 40. The stops enable to lift the seed coulters 32 together out of the ground.

An angular, profiled adjusting tube 50 extends under the carrier 10, parallel thereto and bearing-supported in supports connected thereto. Spring holders 51 provided with a fitting opening are pushed around the profiled tube 50. Via a coupling part 52 of a spring holder 51 there is disposed each time a tension spring 56, extending in the direction of travel A and connected with its rear end, at some distance from the arms 45 and via a chain 53, to a seed tube 49. The adjusting tube 50 comprises near its centre a support 54 extending in the initial position at least downwards and rearwards, which support 54 is pivotably connected near its end with a screw spindle 55 attached to the carrier beam 10. By means of the screw spindle 55, the spring tension under which the seed coulters 32 move through the ground during operation can centrally be adjusted.

To the end surrounding the telescopic part of the adjusting element 25 there is attached a sensor 28, via a plate-shaped support 29, in such a way that the sensor 28 is disposed beyond the said end of the adjusting element 25. The sensor 28 is arranged at right angles to the longitudinal direction of the adjusting element 25 and outside the maximum circumference of the latter element relative to its longitudinal axis. The sensor 28 is disposed at such a distance from the telescopic part of the adjusting element 25 that the telescopic part is not within the reach of the sensor 28, but the connection thereof with the machine part to be controlled does fall within the reach of the sensor. In the present embodiment, this to be detected connection is constituted by a movable portion 30 in which the pivotal axis 27 is included, and the telescopic part is constituted by the piston rod. Each time when the sensor 28 upon detecting the movable portion 30 indicates that the adjusting element 25 is withdrawn and that, consequently, all the sowing elements 11 together are in their inoperative position, a counter in the electronic switch circuit pertaining to the machine is increased. When the counter has reached a preset value, then, by means of the switch circuit, the seed supply to one or more seed coulters is automatically stopped during a working pass for the purpose of creating a driving path ("tramline"). After the working pass in which a driving path has been created, the counter is reset to an initial value. In the embodiment shown, the sensor 28 is constituted by a so-called Namur-sensor. According to the invention, the reference-element, i.e. the movable portion 30, comprises an iron core. As soon as the iron core has come in the vicinity of the Namur-sensor 28, i.e. in the vicinity of the coil provided therein, the condition of the sensor 28 undergoes a change, which is passed on via a connecting cable 37 in the electronic switch circuit, and on the basis of which the said counter is increased. When the sensor 28 is designed e.g. as a so-called Reed-switch, the counter can be increased in an analogous manner.

The control and monitoring unit is in connection with an operating and indication panel which, in the embodiment shown, is integrated into the housing of the unit. The unit 31 is detachably accommodated in the seed drill and is movable, by means of a cable 37, to the cabin of the tractor with which the seed drill is used. In the embodiment shown, the unit 31 is provided with a display 33 for representing textual information or explication regarding the input of data, e.g. with the aid of control keys 36. The unit also comprises coloured lights 34, red-coloured ones in this case, for giving a visual signal, and a loudspeaker 35 for giving a signal to the user.

The function of the construction will be explained in what follows.

When turning on the headland, the coulters 32 can be put out of operation together with the step wheel 12 by activating an adjusting element 25. After activating the adjusting element 25, which means in the present embodiment that the cylinder rod is withdrawn, the assembly of the carrier 10, the adjusting tube 50 and the elements coupled thereto, such as the step wheel 12, the seed coulters 32 and the adjusting member 55, pivots in upward and forward direction about the pivotal axes 23. This prevents for example the seed tubes 49 from being twisted during turning on the headland.

The said switch circuit constitutes a so-called automatic driving path system and forms part of a control and monitoring system pertaining to the machine. The heart of the system is constituted by a control and monitoring unit 31, which is programmable in this embodiment. In a manner known per se, the unit is connected, via sensors and electronic or electromagnetic actuators, with various machine parts, such as the carrier 10, and/or the adjusting element 25 therefor, the ventilator 9, the metering member 15, the seed coulters 32 or the seed tubes 49, for establishing clogging thereof, and/or with slide valves in the hydraulic system of the machine, e.g. for raising or lowering a marker member 17. The control and monitoring unit is capable of being reprogrammed digitally in an easy manner by using so-called Eprom chips.

In accordance with the invention, the sensor 28 which, in the embodiment shown, is included in the adjusting element 25, designed as a hydraulic adjusting cylinder, may be included in the machine at any place between the frame 7, or the frame beam 20 thereof, and the carrier 10, or an element movable therewith. For example, the sensor may be included in the machine via an arm, which is connected either with the frame 7 or with the carrier 10, in such a way that the inoperative position of the seed coulters can be detected. In the present embodiment, the sensor has to be located, in the inoperative position, in the vicinity of an iron core, such as the beam 20, the carrier 10, or an element attached thereto.

In an alternative, non-shown embodiment, the sensor 28 is arranged between a sowing element 11 and the carrier 10. In this embodiment, the sensor is included in a favourable manner in the stop provided between the sowing element 11 and the holder 40 and is designed as a contact sensor. During operation, the sowing elements 11 are active in the ground surface, against action of the spring 56, and are pivoted upwards about the axis 46 relative to the carrier 10. When lifting the carrier beam 10 or the entire seed drill, the sowing elements 11 will assume an inoperative position due to the stop limiting the downward pivotal movement of a sowing element 11, which stop is provided in the connection between the sowing element 11 and the carrier 10. Because of this, according to the invention, the situation in which the sowing elements 11 are lying against the stop constitutes a proper indication for establishing automatically the position of the seed drill. Detection of the position of one sowing element is representative for the other sowing elements. Providing a sensor between the carrier 10 and the sowing element 11 has the advantage that, during overhaul activities, the sowing element is in an almost equal position as during operation, so that the indication means 33 - 35 of the control and monitoring unit 31 can be tested in a simple manner and without further space being required. When the machine is lifted from the ground, the relevant sowing element can easily be adjusted, by means of an accessory, such as a rod, from the stop relative to the carrier 10 into a desired position.

It is noticed that for the present objective any suitable sensor may be applied, and that the sensors mentioned in the above-described embodiments are mutually interchangeable, possibly with some slight adjustment of the holder or the arm of the sensors being made. For example, when applying a contact sensor between the carrier 10 and the beam 20, it is recommendable to dispose the contact sensor via an elastically transformable arm. When applying the said Namur-sensor 28, the operative position can also be simulated in a simple manner by providing a piece of metal in the vicinity of the sensor 28. In accordance with the invention, in the described embodiments, a sensor 28, at least the signal originating therefrom, is used in an advantageous manner both for the aforementioned increase of the counter for the automatic control of the driving path system and for the detection of the operative or inoperative position of the seed drill.

In a specific embodiment according to the invention, the control and monitoring unit 31 can be brought into a mode in which the unit functions irrespective of the operative or inoperative position. This has the advantage that, in case of overhaul activities, the unit can be tested in a simple manner. For the purpose of switching on or off said mode, the unit 31 is provided with control means such as a push button. In an advantageous embodiment, these means are constituted by a combination of two or more keys or switches 36, which, when being operated individually, each have a different function.

The invention is not restricted to the aforementioned description, but also relates to all the details of the drawings. The invention furthermore relates to all sorts of alternatives in the construction, of course, falling within the scope of the following claims.

## Claims

1. A seed drill (3) provided with sowing elements (11) for depositing seed in or on the ground, and with an electronic control and monitoring unit (31) for controlling and/or monitoring functions of the seed drill, which unit (31) cooperates with indication means (33 - 35) for informing and/or alarming a user of the seed drill, which indication means (33 - 35) can be automatically put out of operation depending on one or more positions of the seed drill (3) detected via detection means (28), characterized in that the sowing elements (11) are pivotably mounted in the machine (3) so as to be limited in at least one downward direction, whereas detection means (28) are included in the seed drill (3) in such a manner that the fact of being in an operative or inoperative position of at least one sowing element (11) can be detected, and which indication means are automatically put out of operation when the control and monitoring unit (31) receives, via the detection means (28), a signal from which it can be deduced that at least the relevant sowing element (11) is in an inoperative position.

2. A seed drill as claimed in claim 1, characterized in that detection means (28) are included between a stop (45, 47) limiting the downward movement of a sowing element (11) and the relevant sowing element (11).

3. A seed drill as claimed in claim 1 or 2, characterized in that the seed drill (3) is provided with a carrier (10), which is movable relative to the frame (7) of the seed drill (3), for putting sowing elements (11) together into and out of their operative position, the detection means (28) being arranged between the frame (7) and the carrier (10) or a portion movable therewith (27, 30, 54, 11, 40, 50).

4. A seed drill as claimed in claim 3, characterized in that the carrier is movable, in particular pivotable, by motor drive relative to the frame (7) by means of an adjusting element (25), e.g. a hydraulic adjusting cylinder, and the detection means (28) are included in the adjusting element (25).

5. A seed drill (3) provided with sowing elements (11) for depositing seed in or on the ground and with an electronic control and monitoring unit (31) for controlling and/or monitoring functions of the seed drill, which unit (31) cooperates with indication means (33 - 35) for informing and/or alarming a user of the seed drill, which indication means (33 - 35) can be automatically put out of operation depending on one or more positions of the seed drill (3) detected via detection means (28), characterized in that the seed drill, in particular the control and monitoring unit, is provided with control means with the aid of which the control and monitoring unit can be adjusted into and out of a position in which the latter unit can be active independently of the position of the seed drill.

6. A seed drill as claimed in claim 5, characterized in that the control means are constituted by a combination of two or more control keys which, used individually, have an other and different effect than the aforementioned putting out of operation of the checking function.

7. A seed drill as claimed in any one of the preceding claims, characterized in that the detection means (28) comprise a sensor, in particular an electromagnetic sensor.

8. A seed drill as claimed in any one of the preceding claims, characterized in that the sensor (28) is included in the seed drill (3) via a plate-shaped support (29).

9. A seed drill as claimed in any one of the preceding claims, characterized in that the sensor (28) is included in the machine in such a manner that the carrier (10), or a portion (30) which is movable therewith, will be in the immediate vicinity of the sensor (28) as soon as, taking into account the proportions in the machine and the possibility of the tractor making ruts, the sowing elements (11) may be expected not to be in contact with the ground.

10. A seed drill as claimed in any one of the preceding claims, characterized in that the indication means are detachably included in the machine and are active in a cabin of a vehicle connected with the machine.

11. A seed drill as claimed in any one of the preceding claims, characterized in that the sensor (28), at least the signal originating therefrom, is applied in the control and monitoring unit both for controlling an automatic drive path system and for controlling the indication means.
